# EUROPÄISCHE PATENTSCHRIFT

(11) **EP 1 769 667 B1**
(45) Veröffentlichungstag und Bekanntmachung des Hinweises auf die Patenterteilung: **17.02.2010**
(21) Anmeldenummer: 06118813.2
(22) Anmeldetag: 11.08.2006
(51) Int. Cl.: A01D 41/127

(54) **Selbstfahrende Erntemaschine und Betriebsverfahren dafür**
Self-propelled harvester and method of controlling therefor
Moissoneuse automatrice and méthode de commande pour celle-ci

(30) Priorität: 30.09.2005 DE 102005047335
(43) Veröffentlichungstag der Anmeldung: 04.04.2007
(73) Patentinhaber: CLAAS Selbstfahrende Erntemaschinen GmbH, 33428 Harsewinkel (DE)
(72) Erfinder: Baumgarten, Joachim, Dr., 48361, Beelen (DE); Behnke, Willi, 33803, Steinhagen (DE); Speckamp, Dirk, 59227, Ahlen (DE)

(56) Entgegenhaltungen:
- EP-A- 1 297 733
- DE-A1- 1 942 773
- FR-A- 2 165 441
- GB-A- 2 216 763

## Beschreibung

Die vorliegende Erfindung betrifft ein Verfahren zum Betreiben einer selbstfahrenden Erntemaschine wie etwa eines Mähdreschers und eine Erntemaschine, die zum Betrieb gemäß diesem Verfahren ausgelegt ist.

Ein Mähdrescher umfasst üblicherweise eine Dreschstufe, in der ein Strom von geernteten Halmen aufgetrennt wird in Stroh, das ausgeworfen wird, und einen Strom, der die ausgedroschenen Getreidekörner sowie Verunreinigungen wie etwa Halmbruchstücke, unausgedroschene Ährenstücke, Spelzen etc. enthält, sowie eine Reinigungsstufe, in der mit Hilfe von Sieben und einem Gebläse die Verunreinigungen entfernt werden, um einen im Wesentlichen nur aus ausgedroschenen Körnern bestehenden Nutzmaterialstrom zu erhalten.

In diesem Nutzmaterial zurückbleibende Verunreinigungen erschweren die Weiterverarbeitung des Korns, weswegen die für unzulänglich gereinigtes Korn erzielbaren Erlöse empfindlich niedriger sein können als die für gut gereinigtes.

Es ist zwar technisch kein Problem, die Vielzahl von veränderbaren Betriebsparametern von Dresch- und Reinigungsstufe so einzustellen, dass ein Nutzmaterialstrom von hoher Reinheit erhalten wird, doch führt ein kompromisslos auf Reinheit optimierter Betriebsparametersatz zu hohen Verlusten an Nutzmaterial. Das heißt, in dem Maße, wie Verunreinigungen im geernteten Korn unterdrückt werden, nimmt auch die Menge an Korn zu, die als Restmaterial abgeschieden und somit nicht oder zumindest nicht optimal wirtschaftlich genutzt wird. Ein optimaler Erlös kann daher nur erwirtschaftet werden, wenn ein sinnvoller Kompromiss zwischen Reinheit und Kornverlust gefunden wird.

Es ist selbst für einen erfahrenen Benutzer schwierig, die diversen Betriebsparameter, die einen solchen brauchbaren Kompromiss ergeben, vorab festzulegen, denn diese hängen nicht nur von Art und Sorte des Erntegutes ab, sondern auch von den Umweltbedingungen, unter denen das Erntegut herangewachsen ist, wie etwa Bodenverhältnisse, Klima während der Wachstumszeit, Feuchtigkeitsgehalt des Erntegutes etc. Es ist daher wünschenswert, die Betriebsparameter einer Erntemaschine dynamisch an die Eigenschaften des Erntegutes anpassen zu können.

Aus DE 10147733A1 ist ein Verfahren bekannt, bei dem eine Erntemaschine wie etwa ein Mähdrescher nacheinander mit unterschiedlichen Einstellungen von Betriebsparametern betrieben wird, wobei er jeweils mit einer gleichbleibenden Erntegutmenge beaufschlagt wird, für die verschiedenen Parametereinstellungen erhaltene Arbeitsergebnisse beurteilt werden und schließlich diejenige Parametereinstellung ausgewählt wird, bei der das beste Arbeitsergebnis erhalten wurde. Ein Kriterium zur Beurteilung des Arbeitsergebnisses ist die Kornsauberkeit. Die Schrift sieht eine subjektive Beurteilung der Sauberkeit durch den Bediener durch Zuordnen einer Wertung zwischen ausreichend und sehr gut vor. Eine solche Wertung erfordert, dass der Bediener das geerntete Material in Augenschein nimmt. Sie kann daher nicht vorgenommen werden, während der Mähdrescher arbeitet. Es ist zwar ausgeführt, dass die Kornsauberkeit mit der Dichte des geernteten Korns verknüpft ist, und es ist angegeben, dass ein Korndichtensensor an einem Kornelevator angeordnet sein kann; es wird aber nicht angegeben, wie ein solcher Korndichtesensor aufgebaut sein könnte. In der Tat ist es schwierig, eine zuverlässige Messung der Korndichte bei Korn zu erhalten, das sich zwischen dem Ausgang der Reinigungsstufe und dem Korntank in ständiger Bewegung befindet. Ein direktes Wägen von strömendem Korn liefert keine zulässig reproduzierbaren Ergebnisse; eine indirekte Abschätzung der Dichte, ausgehend zum Beispiel von einer optischen Erfassung, erfordert eine aufwendige Eichung, die aufgrund der oben erwähnten, die optimalen Betriebsparameterwerte von Dresch- und Reinigungsstufe beeinflussenden Umweltgrößen für jeden Erntevorgang einzeln durchgeführt werden müsste.

Aufgabe der Erfindung ist, ein Verfahren zum Betreiben einer selbstfahrenden Erntemaschine zu schaffen, das auf einfache Weise eine Optimierung der Betriebsparameter der Erntemaschine während des Betriebs erlaubt, so dass Nutzmaterial gleichzeitig mit guter Ausbeute und mit guter Reinheit gewonnen wird.

Die Aufgabe wird gelöst durch ein Verfahren wie in Anspruch 1 definiert. Indem wenigstens ein Teil des Nutzmaterialstromes aus der Trennstufe in einer Messkammer verzögert wird, werden die nicht reproduzierbaren Einflüsse beseitigt, die herkömmlicherweise eine Dichtemessung an einem bewegten Materialstrom erschweren.

Einem ersten Ansatz zufolge werden Füllstand und Masse des Nutzmaterials in der Messkammer ermittelt und daraus die Dichte berechnet. Dieser Ansatz eignet sich insbesondere für eine große Messkammer, zu deren Füllung große Materialmengen erforderlich sind. Die Ermittlung des Füllstandes erlaubt es, eine Aussage über die Nutzmaterialdichte bereits vor einer vollständigen Füllung der Messkammer zu treffen.

Wenn die Erntemaschine ein Mähdrescher ist, kann es sich bei der Messkammer insbesondere um dessen Korntank selber handeln.

Einem zweiten Ansatz zufolge wird zur Ermittlung der Dichte die Masse der bis auf ein vorgegebenes Maß gefüllten Messkammer gemessen. Die so erhaltene Masse ist jederzeit zur Dichte direkt proportional, daher ist ein Vergleich von mit unterschiedlichen Betriebsparametern erhaltenen Dichten auch dann möglich, wenn das Volumen des vorgegebenen Maßes nicht genau bekannt ist.

Einer bevorzugten Weiterentwicklung dieses zweiten Ansatzes zufolge wird der Messkammer wenigstens ein Teil des Nutzmaterialstromes kontinuierlich zugeführt, und ein aus der Messkammer heraus geförderter Strom wird geregelt, um die Füllung der Messkammer auf dem vorgegebenen Maß zu halten. Ein solches Verfahren ist insbesondere praktikabel bei einem Mähdrescher, der geerntetes Korn kontinuierlich an ein Begleitfahrzeug abgibt und selbst nur einen kleinen Zwischentank aufweist, wobei dieser dann als Messkammer nutzbar ist.

Einer besonders einfachen Ausgestaltung zufolge ist das vorgegebene Maß die vollständige Füllung der Messkammer, und der Messkammer über die vollständige Füllung hinaus zugeführtes Nutzmaterial wird durch einen Überlauf abgeführt.

Um sicherzustellen, dass ein Dichtemesswert erhalten wird, der die Qualität des aktuell gewonnenen Nutzmaterials wiederspiegelt, muss für einen kontinuierlichen Austausch des Nutzmaterials in der Messkammer gesorgt sein. Dies ist auf einfache Weise erreichbar, wenn Nutzmaterial aus der Messkammer kontinuierlich abfließt, das durch den zugeführten Nutzmaterialstrom fortlaufend ergänzt wird. Auch sollte der zugeführte Nutzmaterialstrom stärker als der kontinuierlich abfließende Strom sein. So ist im Dauerbetrieb jederzeit für eine vollständige Füllung der Messkammer gesorgt, während überschüssiges der Messkammer zugeführtes Nutzmaterial über den Überlauf abläuft.

Um eine gute Reinheit des Nutzmaterials zu erzielen, umfasst die Optimierung der Betriebsparameter der Trennstufe vorzugsweise das Ändern wenigstens eines Betriebsparameters der Trennstufe in einer Richtung, die zu einer Erhöhung der Dichte des abgetrennten Nutzmaterials führt.

Eine solche Änderung wird vorzugsweise nur dann durchgeführt, wenn die erhaltene Dichte des Nutzmaterials um mehr als ein vorgegebenes Maß unter einer Referenzdichte liegt. Wenn die Dichte des Nutzmaterials um weniger als das vorgegebene Maß unter der Referenzdichte liegt, kann angenommen werden, dass bereits eine gute Reinheit des Nutzmaterials erzielt ist und weitere Betriebsparameteränderungen mit dem Ziel, die Dichte weiter zu steigern, zu einer unverhältnismäßigen Steigerung der Verluste an Nutzmaterial führen würden.

Daher ist es zweckmäßig, wenn die Optimierung auch das Ändern wenigstens eines Betriebsparameters der Trennstufe in einer Richtung umfasst, die zu einer Verringerung eines Restanteiles an Nutzmaterial in dem Restmaterialstrom, konkreter gesprochen in dem Fall, dass die Erntemaschine ein Mähdrescher ist: zu einer Verringerung der Kornverluste, führt, insbesondere, wenn die Dichte des Nutzmaterials um weniger als ein vorgegebenes Maß von der Referenzdichte abweicht.

Ein hohes .Maß an Flexibilität wird erreicht, wenn eine Richtung der Änderung des Betriebsparameters, die zu einer Steigerung der Dichte des Nutzmaterialstromes oder einer Verringerung des Restanteiles führt, experimentell ermittelt wird.

Wenn die Änderung eines ersten ausgewählten Parameters der Trennstufe nicht zu einer erwarteten Steigerung der Dichte des Nutzmaterialotromes oder Verringerung des Restanteiles führt, wird zweckmäßigerweise ein zweiter Parameter ausgewählt und geändert. Durch Iterieren der Schritte des Dichtebestimmens und des Änderns der Parameter kann im Laufe der Zeit eine optimale oder wenigstens nahezu optimale Parametereinstellung gefunden werden.

Die in einer gegebenen Iteration verwendete Referenzdichte kann aus einer in einer vorhergehenden Iteration gemessenen Dichte abgeleitet werden. Dadurch wird das Verfahren weitgehend unabhängig von Dichteschwankungen des Nutzmaterials, die von einem Erntevorgang zum anderen aufgrund unterschiedlicher Fruchtqualitäten, Feuchtigkeitsgehalte etc. auftreten können.

Die Referenzdichte kann vorab bei einer vorgegebenen scharfen Einstellung der Trennstufe, das heißt bei einer Einstellung, die bekanntermaßen einen hochreinen Nutzmaterialstrom, aber auch hohe Nutzmaterialverluste liefert, gemessen werden.

Jeweils zu Beginn eines Erntevorganges eingestellte Werte von Betriebsparametern sind vorzugsweise in Abhängigkeit von der zu erntenden Fruchtart vorgegeben.

Gegenstand der Erfindung ist auch eine Erntemaschine, mit der ein Verfahren wie oben beschrieben durchführbar ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine landwirtschaftliche Erntemaschine in Form einer schematisierten Seitenansicht eines Mähdreschers;
- Fig. 2: einen schematischen Schnitt durch eine Korndichte-Messeinrichtung gemäß einer ersten Ausgestaltung der Erfindung;
- Fig. 3: eine schematische perspektivische Ansicht einer Korndichten-Messeinrichtung gemäß einer zweiten Ausgestaltung der Erfindung;
- Fig. 4: ein Flussdiagramm eines von einer Steuerung des Mähdreschers ausgeführten Arbeitsverfahrens; und

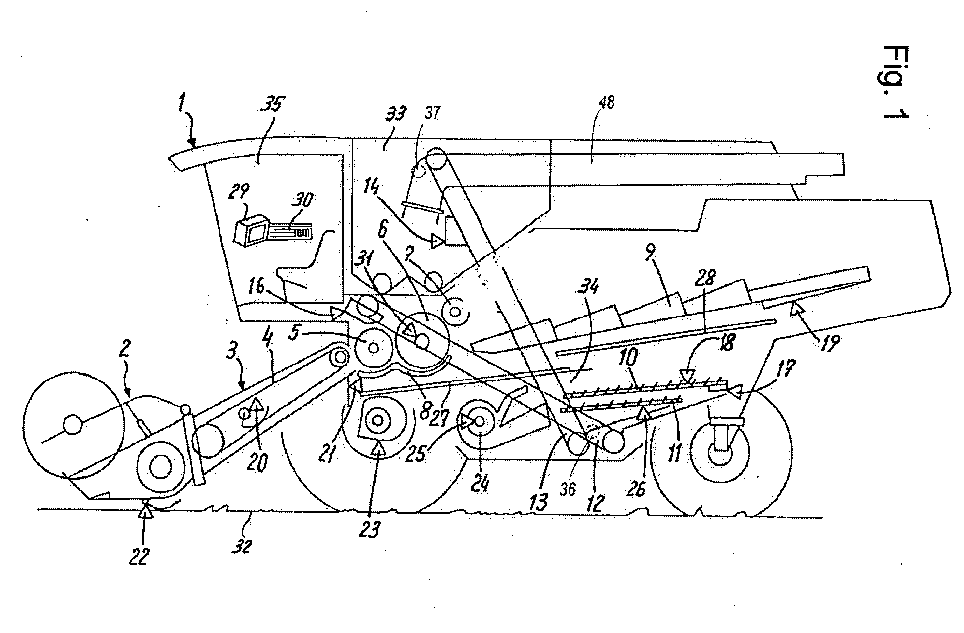

In der Fig. 1 wird ein schematisierte Seitenansicht eines Mähdreschers 1 gezeigt. Aufgabe eines Mähdreschers 1 ist es, auf Halmen wachsendes Erntegut von einer Bearbeitungsfläche 32 aufzunehmen und von dem Stroh und weiteren Beimengungen zu trennen. Zur Aufnahmen des Erntegutes ist in der Fig. 1 beispielsweise ein Getreideschneidwerk 2 dargestellt. Dieses schneidet die Ernteguthalme mit dem in den Ähren befindlichen Erntegut vom Bearbeitungsfeld 32 ab und führt es anschließend auf die Breite des Einzugs 3 zusammen. In dem Einzug 3 befinden sich umlaufende Einzugsketten 4 mit Querstegen, die das Erntegut den nachgeordneten Dreschaggregaten 5, 6 zuführen. Das Erntegut wird von der Vorbeschleunigertrommel 5 am Ende des Schrägförderers 3 abgenommen und entlang des Umfangs der Vorbeschleunigertrommel 5 zwischen der Vorbeschleunigertrommel 5 und dem Dreschkorb 8 beschleunigt. Das beschleunigte Erntegut wird dann an die Dreschtrommel 6 übergeben und weiter beschleunigt. Durch die schlagende und reibende Wirkung der Vorbeschleunigertrommel 5 sowie der Dreschtrommel 6 und die auf das Erntegut wirkende Zentrifugalkraft wird das Erntegut aus den Ähren und vom Stroh getrennt und gelangt dann durch den für das Erntegut durchlässigen Dreschkorb 8 auf den Vorbereitungsboden 27. Das von der Dreschtrommel 6 abgegebene Stroh wird durch die Wendetrommel 7 auf mehrere über die Arbeitsbreite nebeneinander angeordnete Schüttler 9 umgelenkt. Die Schwingbewegung der Schüttler 9 sowie deren stufenförmige Ausbildung bewirken eine Förderung des Strohs zum hinteren Ende des Mähdreschers hin sowie eine Abscheidung des noch im Stroh befindlichen Erntegutes. Diese Restmenge wird durch den Rücklaufboden 28 und eine Schwingbewegung desselben ebenfalls auf den Vorbereitungsboden 27 übergehen. Das auf dem Vorbereitungsboden 27 befindliche Erntegut mit den weiteren Beimengungen, wie Strohstücke, Spreu und Ährenteile, wird durch eine Schwingbewegung desselben und dessen stufenförmige Ausbildung separiert und den nachfolgenden Reinigungsaggregaten 10, 11, 24 zugeführt. Die Übergabe erfolgt über eine von dem Reinigungsgebläse 24 belüftetet Fallstufe 34 auf das Obersieb 10. Dieses sowie das darunter befindliche Untersieb 11 sind in der Regel Lamellensiebe mit jeweils separat einstellbaren Öffnungsweiten, wobei das Obersieb 10 im hinteren Bereich mit einer von der restlichen Öffnungsweite des Obersiebs 10 unterschiedlichen Öffnungsweite eingestellt werden kann. Das Unter- sowie das Obersieb 10, 11 werden von einem von dem Reinigungsgebläse 24 erzeugten Luftstrom durchsetzt. Die Schwingbewegung der Siebe 10,11 sowie der Luftstrom bewirken eine Förderung des Erntegutes sowie von dessen Beimengungen zum hinteren Ende der Erntemaschine hin. Durch die Fallstufe 34 werden große und leichte Beimengungen von dem Luftstrom, bevor sie das Obersieb 10 erreichen, erfasst und aus dem Mähdrescher 1 abgeschieden. Kleinere und schwerere Erntegutbestandteile gelangen von dem Vorbereitungsboden 27 über die Fallstufe 34 auf das Obersieb 10. Je nach Einstellung der Obersiebweite fallen die einzelnen Erntegutkörner und weitere Bestandteile des Erntegutes durch dieses hindurch und gelangen so auf das Untersieb 11. Stroh und nicht ausgedroschene Ähren werden über den vorderen Siebbereich hinweg bewegt und fallen im hinteren Bereich des Obersiebes 10 durch das Obersieb 10 direkt in die sogenannte Überkehr. Das Untersieb 11 besitzt in der Regel eine feinere Sieblamellenstruktur als das Obersieb 10 und wird normalerweise mit einer geringeren Öffnungsweite als das Obersieb 10 eingestellt. Größere und leichte Erntegutbestandteile, wie Erntegutkörner mit Spelz, Ährenteile oder Halmteile werden, sofern sie durch das Obersieb 10 auf das Untersieb 11 gelangt sind, durch die Schwingbewegung und den Luftstrom in die sogenannte Überkehr übergeben. Das gereinigte Erntegut selbst fällt direkt durch das Untersieb 11 hindurch und wird mittels einer Zuführschnecke und dem Kornelevator 13 in den Korntank 33 gefördert. Das in die Überkehr gelangte Erntegut wird mittels einer Zuführschnecke und dem Überkehrelevator 12 oberhalb der Vorbeschleunigertrommel 5 erneut dem Dreschprozess zugeführt.

Der Mähdrescher 1 ist mit einer Fahrerkabine 35 ausgestattet, in welcher eine Steuer- und Monitoreinrichtung 29 sowie eine Bedien- und Anzeigeeinrichtung 30 angeordnet sind. Ferner sind dort nicht näher dargestellte, dem Fachmann bekannte Einrichtung zur Vorgabe der Fahrtrichtung und Fahrgeschwindigkeit des Mähdreschers 1 vorhanden. Die Steuer- und Monitoreinrichtung 29 sowie die Anzeige- und Bedieneinrichtung 30 stehen mit in dem Mähdrescher 1 an verschiedenen Orten angeordneten einzelnen Sensoren und Aktoren in Verbindung. Der Bediener des Mähdreschers 1 erhält hierdurch die Möglichkeit, die Funktionsweise des Mähdreschers 1 einstellen und überwachen zu können. In der Fig. 1 werden durch Pfeilspitzen die einzelnen Stellen in dem Mähdrescher 1 angedeutet, an welchen ein Sensor zur Ermittlung von Prozess- und Einstellparameter angeordnet ist. Die jeweiligen Aktoren zur Einstellung des Mähdreschers 1 sind dem Fachmann ausreichend bekannt, so dass in dieser Fig. 1 auf die Darstellung des jeweiligen Elementes verzichtet werden kann.

Dem Schneidwerk 2 ist eine Schnitthöhen-Messeinrichtung 22 zugeordnet. Diese Einrichtung 22 dient der Ermittlung des tatsächlichen Abstandes zwischen dem Schneidwerk 2 und der Bearbeitungsfläche 32. Der sensierte Wert kann mittels der Monitoreinrichtung 29 oder der Anzeigeeinrichtung 30 dem Bediener angezeigt und ferner als Istwert für eine automatische Schnitthöhenregelung verwendet werden. Zur Erfassung der Erntemenge M ist in dem Schrägförderer 3 eine Erntemengenmesseinrichtung 20 angebracht. Diese ermittelt die von der Erntemenge M abhängige Auslenkung einer Einzugskette 4. Eine weitere Sensorik ist an dem Dreschkorb 8 angeordnet. Diese Dreschkorbweiten-Messeinrichtung 21 ist einfach oder mehrfach ausgebildet und ermittelt den Abstand zwischen der Vorbeschleunigertrommel 5 und dem Dreschkorb 8 und/oder der Dreschtrommel 5 und dem Dreschkorb 8 an einer oder mehreren Stellen. Die Vorbeschleunigertrommel 5, die Dreschtrommel 6 und die Wendetrommel 7 werden in der Regel von einem gemeinsamen Antrieb angetrieben, wobei die Drehzahlen der Trommeln 5, 6, 7 über einen Stellantrieb variiert werden können. Diesen Trommeln 5, 6, 7 ist eine Dreschtrommeldrehzahl-Messeinrichtung 31 zur Erfassung zumindest einer der Trommeldrehzahlen zugeordnet. Zur Erzeugung unterschiedlicher Luftströme durch die Reinigungseinrichtung ist der Antrieb des Reinigungsgebläses 24 drehzahlvariabel ausgeführt. Die tatsächliche Drehzahl des Reinigungsgebläses 24 wird mittels einer Reinigungsgebläse-Messeinrichtung 25 erfasst. Der Reinigungseinrichtung können weitere Sensoren zugeordnet sein. So lässt sich auch die jeweilige Sieböffnungsweite durch eine Obersieb-Weitenmesseinrichtung 18 und eine Untersieb-Weitenmesseinrichtung 26 erfassen. Diese Messeinrichtungen 18, 26 können Teil der jeweiligen nicht dargestellten Einstelleinrichtung oder separat ausgeführt und jeweils am Sieb 10,11 angeordnet sein. Am hinteren Ende des Obersiebes 10 ist eine Obersieb-Verlustmesseinrichtung 17 angeordnet. Hiermit lassen sich anteilig die Erntegutkörner erfassen, die über die Reinigungseinrichtung hinweg den Mähdrescher 1 verlassen und als Verluste verloren gehen. Derartige Sensoren sind dem Fachmann bekannt und erstrecken sich teilweise oder komplett über die Arbeitsbreite der Reinigungseinrichtung. Sie sind normalerweise als Prallplatte oder -rohr ausgebildet und werten die Schwingungen aus, die durch Aufprall von Erntegutkörnern auf der Platte oder Röhre erzeugt werden. Diese Sensortechnik kann ferner an jeder beliebigen Stelle in einem Mähdrescher 1 eingesetzt und angeordnet werden. Hierdurch lassen sich dann Erntegutkörnerströme erfassen und ermöglichen zumindest eine vergleichende und relative Aussage über die am Einsatzort herrschenden Körnermengen. So wird diese Sensortechnik auch in den Schüttlern 9 zur Erfassung der Abscheidung eingesetzt. Um eine Aussage über die noch im Stroh befindlichen Resterntegutkörner zu erhalten, ist zumindest am hinteren Ende eines Schüttlers 9 ein Schüttler-Verlustsensor 19 befestigt. Dieser Sensor 19 erfasst anteilig die noch am Ende des Schüttlers 9 abgeschiedene Resterntegutkörner. Auch zur Beurteilung der Erntegutkörnermenge in der Überkehr lässt sich eine solche Prallplatten-Sensorik am Ende des Untersiebes 11 oder an der Stelle der Rückführung der Überkehr in den Dreschprozess anordnen.

Zur Beurteilung der in der Überkehr befindlichen Erntegutbestandteile ist eine Überkehrmesseinrichtung 16 am oberen Ende des Überkehrelevators 12 angeordnet. Hiermit lassen sich das Überkehrvolumen, der Korn- und der Bruchkornanteil bestimmen. Bekannt sind hierfür optische Lichtschranken, optische Sensoren oder Durchleuchtungssensoren (NIR-Sensoren). Der Kornelevator 13 ist mit einem Ertragsmesssystem 14 ausgestattet.

Einrichtungen zur Messung der Korndichte können an unterschiedlichen Stellen des Mähdreschers, zum Beispiel den in Fig. 1 jeweils durch strichpunktierte Kreise 36, 37 bezeichneten Stellen, vorgesehen sein.

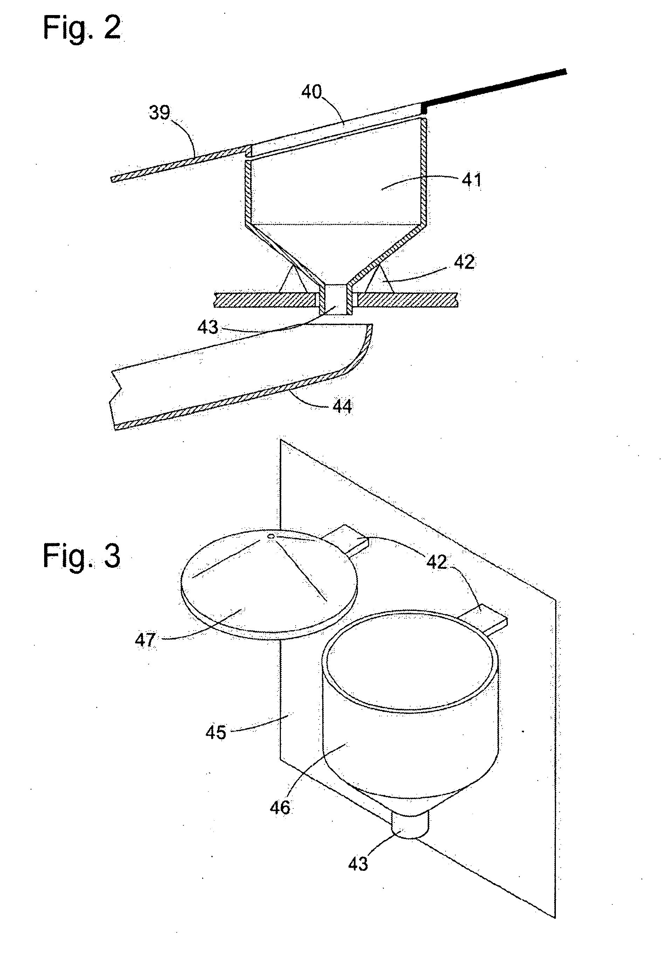

Fig. 2 zeigt einen schematischen Schnitt durch eine Korndichten-Messeinrichtung, die zum Beispiel an dem durch den Kreis 36 bezeichneten Ort vorgesehen sein kann. In einer unter dem Untersieb 11 angeordneten abschüssigen Platte 39, auf der Korn, welches das Untersieb 11 passiert hat, zum Kornelevator 13 gleitet, ist eine Öffnung 40 gebildet, unter der ein Becher 41 angeordnet ist. Der Becher 41 ist an einem Gestell über Kraftsensoren 42 gehalten, die ein für die Masse des Inhaltes des Bechers 41 repräsentatives Messsignal an die Steuer- und Monitoreinrichtung 29 liefern. Am tiefsten Punkt des Bodens des Bechers 41 ist eine Auslassöffnung 43 gebildet, und unter dieser befindet sich eine zum Kornelevator 13 führende Rutsche 44.

Im Betrieb füllt auf der Platte 39 gleitendes Korn den Becher 41 bis zum Rand. Korn, das im Becher 41 keinen Platz findet, gleitet darüber hinweg. Die Auslassöffnung 43 ist so bemessen, dass die hierüber abfließende Kornmenge kleiner ist als die, die über die Öffnung 40 hinwegfließt, so dass stets eine vollständige Füllung des Bechers 41 gewährleistet ist, der Inhalt des Bechers 41 aber fortlaufend ausgetauscht wird, so dass darin enthaltenes Korn repräsentativ für die Qualität des gegenwärtig geernteten Korns ist. Das Korn kommt in dem Becher 41 praktisch zur Ruhe, so dass es sich setzen kann und die gemessene Masse des Bechers 41 tatsächlich einen sicheren Rückschluss auf die Korndichte gestattet. Die Verweildauer des Korns in dem Becher 41 ist festgelegt durch das Verhältnis zwischen dessen Volumen und dem Querschnitt der Auslassöffnung 43; die Verweildauer kann zum Beispiel einige Minuten betragen.

Eine zweite Ausgestaltung einer Korndichten-Messvorrichtung ist in Fig. 3 in perspektivischer Ansicht dargestellt; diese Ausgestaltung kann an Stellen im Mähdrescher eingebaut sein, wo das Korn frei fällt, zum Beispiel am Ausgang des Kornelevators 13. An einer Trägerwand 45, dem Strom des fallenden Korns ausgesetzt, sind ein Becher 46 und ein Schirm 47 montiert. Beide sind mit Kraftsensoren ausgestattet, im Falle des Bechers 46 erfassen sie die Gewichtskraft des Bechers 46 und von dessen Inhalt sowie die von von oben darauf aufprallendem Korn ausgeübte Kraft. Der Sensor des Schirmes 47 erfasst dessen Masse sowie ebenfalls die Kraft des aufprallenden Korns. Querschnittsfläche von Becher 46 und Schirm 47 sind gleich, und die Kontur des Schirmes 47 bildet einen Schüttkegel nach, den das Korn im Becher 46 im Betrieb ausbildet. Sofern die Dichte des Kornregens, dem Becher 46 und Schirm 47 ausgesetzt sind, die gleiche ist, erfassen somit beide die gleiche Kraft des aufprallenden Korns, unabhängig von Schwankungen in der Dichte des Kornstromes, Erschütterungen des Mähdreschers oder dergleichen. Wie der Becher 41 der Fig. 2 hat auch der Becher 46 eine Auslassöffnung 43, über die Korn kontinuierlich abfließen kann, so dass sich der Inhalt des Bechers 46 laufend austauscht. Durch Ermitteln der Differenz zwischen den von den Sensoren des Bechers 46 und des Schirms 47 erfassten Kräften beurteilt die Steuer- und Monitoreinrichtung 29 die Masse des Korns im Becher 46, und, da das Volumen des Becherinhaltes als konstant angenommen werden kann, dessen Dichte.

Einer dritten, nicht figürlich dargestellten Ausgestaltung zufolge ist der Korntank 33 selber als eine Messkammer zur Ermittlung der Korndichte ausgelegt, indem er mit Sensoren einerseits zur Ermittlung der Masse des im Tank enthaltenen Korns und andererseits des Füllstandes des Tanks ausgestattet ist. Aus Kenntnis der Masse und des Füllstandes ist wiederum die Steuer- und Monitoreinrichtung 29 in der Lage, die Dichte des Korns im Tank zu berechnen.

Einer vierten Ausgestaltung zufolge ist die Förderleistung eines (nicht dargestellten) Elevators, der dazu dient, Korn aus dem Tank 33 über einen Auslegerarm 48 in ein begleitendes Fahrzeug umzuladen, in Abhängigkeit vom erfassten Füllstand des Tanks 33 regelbar, um diesen Füllstand auf einem konstanten Wert zu halten. Wenn der Füllstand des Tanks 33 auf diese Weise im Betrieb konstant gehalten wird, stellt die gemessene Masse/ des Korns im Tank 33 direkt ein Maß für dessen Dichte dar.

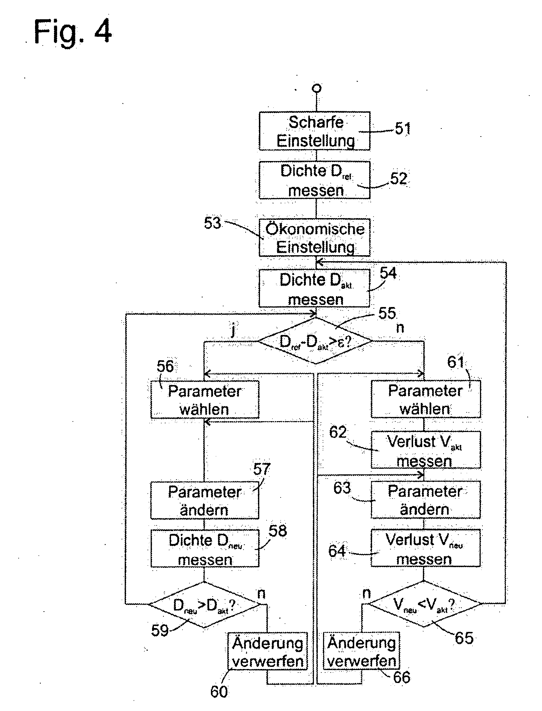

Fig. 4 zeigt ein Flussdiagramm eines von der Steuer- und Monitoreinrichtung 29 ausgeführten Betriebsverfahrens.

Die Steuer- und Monitoreinrichtung 29 ist eingerichtet, um die diversen oben erwähnten Betriebsparameter des Mähdreschers, die die Kornreinheit und die Kornverluste beeinflussen, wie etwa die Drehzahlen der Trommeln 5, 6, 7 des Dreschwerks, die Spaltweite des Dreschkorbs 8, die Weite von Obersieb 10 und Untersieb 11, die Drehzahl des Reinigungsgebläses 24 etc. zu steuern. In einem Verfahrensschritt 51 zu Beginn eines Erntevorganges stellt die Steuer- und Monitoreinrichtung 29 das Dreschwerk und/oder die Reinigungsstufe des Mähdreschers "scharf" ein, um Korn zu erhalten, das mit Gewissheit frei von Verunreinigungen ist. Eine solche scharfe Einstellung beinhaltet z.B. im Falle des Dreschwerks hohe Drehzahlen der Dreschtrommel 6 und eine geringe Spaltbreite des Dreschkorbs 8. Eine solche Einstellung liefert am Ausgang des Dreschwerks einen zu reinigenden Materialstrom, in dem das Korn weitgehend von anhaftenden Spelzen und Ährenstücken getrennt ist, in dem allerdings auch ein unerwünschter hoher Anteil an Kornbruch enthalten ist. Im Falle der Reinigungsstufe ist die scharfe Einstellung durch eine hohe Drehzahl des Gebläses 24 und eine kleine Spaltbreite der Siebe 10, 11 gekennzeichnet und führt dazu, dass zusammen mit den gewünschtermaßen abzuscheidenden Bestandteilen wie Körnern mit Spelz, Ähren- und Halmbruchstücken auch eine große Menge an gutem Korn abgeschieden wird und in die Überkehr gelangt oder ausgeworfen wird. Erhöhte Kornverluste durch die scharfe Einstellung werden zeitweilig in Kauf genommen. Es ist nicht erforderlich, diese Einstellung lange Zeit beizubehalten oder den dem Dreschwerk zugeführten Erntegutstrom längere Zeit konstant zu halten; es genügt, dass eine für eine Dichtemessung in Schritt 52 ausreichende Kornmenge gewonnen wird. Der so erhaltene Dichtewert dient als Referenzwert D_{ref} für den weiteren Betrieb.

Anschließend wird eine ökonomische Einstellung der Betriebsparameter des Mähdreschers vorgenommen, das heißt es werden Parameterwerte eingestellt, die sich erfahrungsgemäß für das zu erntende Material als geeignet erwiesen haben und zum Beispiel als Voreinstellungen in der Steuer- und Monitoreinrichtung 29 in Zuordnung zur Art des Erntegutes gespeichert sein können.

Es folgt eine Messung 54 der aus dieser ökonomischen Einstellung resultierenden Korndichte Dₐₖₜ.

Anschließend wird in Schritt 55 überprüft, ob die Differenz D_{ref}-Dₐₖₜ zwischen den zwei Dichtewerten oberhalb oder unterhalb einer vorgegebenen Toleranzschwelle ε liegt. Wenn die Differenz darüber liegt, wird in Schritt 56 ein Betriebsparameter ausgewählt, der geändert werden soll, um zu einer höheren Dichte des geernteten Korns zu gelangen. Der ausgewählte Betriebsparameter kann ein Betriebsparameter der Reinigungsstufe oder auch des Dreschwerks sein, denn auch die Einstellung des Dreschwerk beeinflusst über die Qualität des Ausdruschs die Korndichte: "Weiches" Dreschen liefert einen hohen Anteil an nicht entspelztem oder mit Ährenresten behaftetem Korn, das, wenn es nicht ausgeschieden wird, die Dichte des geernteten Korns verringert; hartes Dreschen liefert eine große Menge an kleinen Nicht-Korn-Bruchstücken, die ebenfalls eine geringere Dichte als das Korn haben.

Das Ausmaß der Änderung des ausgewählten Parameters in Schritt 57 kann fest vorgegeben sein; es ist auch möglich, die Änderung proportional zu der Differenz D_{ref}-Dₐₖₜ zu wählen, um schnell zu einem günstigen Wert des Parameters zu gelangen. Eine erneute Dichtemessung 58 ergibt den Dichtewert Dₙₑᵤ. In Schritt 59 wird beurteilt, ob Dₙₑᵤ > Dₐₖₜ ist, das heißt, ob die Parameteränderung zu einer Dichtezunahme geführt hat. Ist dies nicht der Fall, wird die Parameteränderung in Schritt 60 verworfen, und anschließend entweder die Richtung der Parameteränderung geändert und zu Schritt 57 zurückgekehrt, oder, falls dies bereits versucht wurde und zu keiner Verbesserung geführt hat, zu Schritt 56 zurückgekehrt, um einen neuen Parameter zu wählen. Wird hingegen in Schritt 59 eine Vergrößerung der Dichte festgestellt, so wird der bisher gespeicherte Wert Dₐₖₜ durch Dₙₑᵤ ersetzt, und das Verfahren kehrt zu Schritt 55 zurück.

So werden die einzelnen Parameter der Reihe nach optimiert, bis die Differenz D_{ref}-Dₐₖₜ unter ε fällt. Wenn dies in Schritt 55 erfasst wird, wird davon ausgegangen, dass eine hinreichend gute Annäherung an den Referenzwert D_{ref} der Dichte erzielt ist, so dass das geerntete Korn eine hinreichende Sauberkeit aufweist. Nun kann eine Optimierung der Kornverluste vorgenommen werden, wofür zunächst in Schritt 61 ebenfalls ein zu verändernder Parameter aus den Betriebsparametern des Mähdreschers ausgewählt wird. Bevor dieser Parameter in Schritt 63 geändert wird, wird die aktuelle Kornverlustrate Vₐₖₜ erfasst.

Das Ausmaß der Parameteränderung in Schritt 63 kann für die einzelnen Betriebsparameter fest vorgegeben sein. Wenn allerdings die Differenz D_{ref}-Dₐₖₜ größer als ein für jeden Parameter vorgegebener Grenzwert ist, ist es zweckmäßig, das Ausmaß der Parameteränderung proportional zu der Differenz festzulegen, um mit wenigen Änderungsschritten zu einem kleinen Wert der Differenz zu gelangen.

Nach der Änderung wird die neue Kornverlustrate Vₙₑᵤ erfasst (Schritt 64), und die zwei Verlustraten werden in Schritt 65 verglichen. Wiederum führt eine Verschlechterung der Verlustrate dazu, dass die Änderung verworfen wird (Schritt 66) und anschließend eine Änderung des gleichen Parameters in entgegengesetzte Richtung in Schritt 63 durchgeführt oder, wenn dies bereits nicht erfolgreich gewesen ist, in Schritt 61 ein neuer zu ändernder Parameter gewählt wird. Ergibt sich jedoch in Schritt 65 eine Verbesserung der Verlustrate, so kehrt das Verfahren zu Schritt 54 zurück, um die aktuelle Dichte zu messen und zu prüfen, ob diese sich noch in der zugelassenen Entfernung ε vom Referenzwert D_{ref} befindet.

Das beschriebene Verfahren bildet eine Endlosschleife, die dazu führt, dass im Dauerbetrieb die Dichte des Korns fortlaufend geringfügig um D_{ref}-ε schwankt. Alternativ könnte in Schritt 55 auch ein Vergleich der Differenz D_{ref}-Dₐₖₜ mit zwei Toleranzschwellen ε1, ε2 mit ε1<ε2 vorgesehen werden, wobei nur im Fall D_{ref}-Dₐₖₜ>ε2 zu Schritt 56 und nur im Fall D_{ref}-Dₐₖₜ<ε1 zu Schritt 61 verzweigt wird und anderenfalls die optimale Einstellung als gefunden angesehen wird.

## Patentansprüche

1. Verfahren zum Betreiben einer selbstfahrenden Erntemaschine (1) mit den Schritten
a) Kontinuierliches Trennen eines Erntegutstroms in einen Nutzmaterialstrom und einen Restmaterialstrom in einer Trennstufe (6-12) der Maschine (1) mit einer Einstellung der Trennstufe (6-12) die einen hochreinen Nutzmaterialstrom liefert;
b) Auffangen wenigstens eines Teils des Nutzmaterialstroms aus der Trennstufe (6-12) in einer Messkammer (41; 46; 33);
c) Wägen des in der Messkammer (41; 46; 33) enthaltenen Nutzmaterials und Ermitteln der Dichte aus der gemessenen Masse als Referenzwert (D_{ref});
d) Kontinuierliches Trennen eines Erntegutstroms in einen Nutzmaterialstrom und einen Restmaterlaistrom in einer Trennstufe (6-12) der Maschine (1) mit geänderter Einstellung der Trennstufe (6-12),
e) Auffangen wenigstens eines Teils des Nutzmaterialstroms aus der Trennstufe (6-12) in einer Messkammer (41; 46; 33);
f) Wägen des in der Messkammer (41; 46; 33) enthaltenen Nutzmaterials und Ermitteln der Dichte (Dₐₖₜ) aus der gemessenen Masse;
g) Optimieren (51-66; 71-79) von Betriebsparametern der Trennstufe (41; 46; 33) anhand eines Vergleichs des Referenzwertes (D_{ref}) der Dichte und der ermittelten Dichte (Dₐₖₜ).

2. Verfahren nach Anspruch 1,
**dadurch gekennzeichnet, dass**
der Füllstand des Nutzmaterials in der Messkammer (33) ermittelt und daraus die Dichte berechnet wird.

3. Verfahren nach Anspruch 1,
**dadurch gekennzeichnet, dass**
in Schritt b) die Kammer (41; 46; 33) bis auf ein vorgegebenes Maß gefüllt wird.

4. Verfahren nach Anspruch 3,
**dadurch gekennzeichnet, dass**
der Messkammer (33) wenigstens ein Teil des Nutzmaterialstrams kontinuierlich zugeführt wird und ein aus der Messkammer herausgeförderter Strom geregelt wird, um die Füllung der Messkammer (33) auf dem vorgegebenen Maß zu halten.

5. Verfahren nach einem der vorhergehenden Ansprüche,
**dadurch gekennzeichnet, dass**
die Erntemaschine ein Mähdrescher (1) und die Messkammer (33) der Korntank des Mähdreschers (1) Ist.

6. Verfahren nach Anspruch 3,
**dadurch gekennzeichnet, dass**
das vorgegebene Maß die vollständige Füllung der Messkammer (41; 46) ist und dass der Messkammer (41; 46) über die vollständige Füllung hinaus zugeführtes Nutzmaterial durch einen Überlauf abgefühlt wird.

7. Verfahren nach Anspruch 6,
**dadurch gekennzeichnet, dass**
Nutzmaterial aus der Messkammer (41; 46) kontinuierlich abfließt, wobei der zugeführte Nutzmateriaistrom stärker als der abfließende ist.

8. Verfahren nach einem der vorhergehenden Ansprüche,
**dadurch gekennzeichnet, dass**
die Optimierung das Ändern (57; 74) wenigstens eines Betriebsparameters der Trennstufe (6-12) in einer Richtung umfasst, die zu einer Erhöhung der Dichte des abgetrennten Nutzmaterials führt.

9. Verfahren nach Anspruch 8,
**dadurch gekennzeichnet, dass**
die Änderung (57) des Betriebsparameters nur durchgeführt wird, wenn die in Schritt f) erhaltene Dichte um mehr als ein vorgegebenes Maß unter einer Referenzdichte liegt.

10. Verfahren nach einem der vorhergehenden Ansprüche,
**dadurch gekennzeichnet, dass**
die Optimierung das Ändern (63) wenigstens eines Betriebsparameters der Trennstufe (6-12) in einer Richtung umfasst, die zu einer Verringerung eines Restanteils an Nutzmaterial in dem Restmaterialstrom führt.

11. Verfahren nach Anspruch 10,
**dadurch gekennzeichnet, dass**
die Änderung (63) des Betriebsparameters nur durchgeführt wird, wenn die in Schritt f) erhaltene Dichte um weniger als ein vorgegebenes Maß von der Referenzdichte abweicht.

12. Verfahren nach einem der Ansprüche 8 bis 11,
**dadurch gekennzeichnet, dass**
eine Richtung der Änderung des Betriebsparameters, die zu einer Steigerung der Dichte des Nutzmaterialstroms oder einer Verringerung des Restanteils führt, experimentell ermittelt Wird (58,60; 65, 66).

13. Verfahren nach einem der Ansprüche 8 bis 12,
**dadurch gekennzeichnet, dass**
wenn die Änderung eines ersten ausgewählten Parameters der Trennstufe nicht zu einer erwarteten Steigerung der Dichte des Nutzmaterialstroms oder Verringerung des Restanteils führt, ein zweiter Parameter ausgewählt (56) und geändert (57) wird.

14. Verfahren nach einem der vorhergehenden Ansprüche,
**dadurch gekennzeichnet, dass**
die Schritte c) bis g) iteriert werden.

15. Verfahren nach Anspruch 14,
**dadurch gekennzeichnet, dass**
die in g) einer gegebenen Iteration verwendete Referenzdichte von einer in Schritt c) einer vorhergehenden Iteration gemessenen Dichte abgeleitet wird (77).

16. Verfahren nach Anspruch 15 und Anspruch 9 oder 11,
**dadurch gekennzeichnet, dass**
das vorgegebene Maß proportional zur Änderung des Parameters ist,

17. Verfahren nach Anspruch 9 oder 11,
**dadurch gekennzeichnet, dass**
die in Schritt c) bis g) verwendete Referenzdichte vorab bei einer vorgegebenen scharfen Einstellung gemessen wird (52).

18. Verfahren nach einem der vorhergehenden Ansprüche,
**dadurch gekennzeichnet, dass**
anfänglich eingestellte (53, 71) Werte von Betriebsparametern in Abhängigkeit von der zu erntenden Fruchtart vorgegeben sind.

19. Selbstfahrende Erntemaschine mit einer Trennstufe (6-12) zum Trennen eines Erntegutstroms in einen Nutzmaterlaistroms und einen Restmaterlalstrom, einer Messkammer (41; 46; 33) zum Auffangen wenigstens eines Teils des Nutzmaterialstroms, einem Sensor (42) zum Erfassen der Masse des Nutzmaterials in der Messkammer (49; 46;33) und einer Steuervorrichtung (29) für die Trennstufe (6-12) zum Ermitteln der Dichte des in der Messkammer enthaltenen Nutzmaterials und Optimieren von Betriebsparametern der Trennstufe anhand der ermittelten Dichte, nach einem Verfahren nach einem der vorhergehenden Ansprüche.

## Claims

1. A method of operating a self-propelled harvesting machine (1) comprising the steps:
a) continuously separating a crop material flow into a useful material flow and a residual material flow in a separating stage (6-12) of the machine (1) with an adjustment of the separating stage (6-12) which delivers a high-purity useful material flow;
b) catching at least a part of the useful material flow from the separating stage (6-12) in a measuring chamber (41; 46; 33);
c) weighing the useful material contained in the measuring chamber (41; 46; 33) and ascertaining the density from the measured mass as a reference value (D_{ref});
d) continuously separating a crop material flow into a useful material flow and a residual material flow in a separating stage (6-12) of the machine (1) with altered adjustment of the separating stage (6-12),
e) catching at least a part of the useful material flow from the separating stage (6-12) in a measuring chamber (41; 46; 33);
f) weighing the useful material contained in the measuring chamber (41; 46; 33) and ascertaining the density (D_{act}) from the measured mass; and
g) optimising (51-66; 71-79) operating parameters of the separating stage (41; 46; 33) on the basis of a comparison of the reference value (D_{ref}) of the density and the ascertained density (D_{act}).

2. A method according to claim 1 **characterised in that** the filling level of the useful material in the measuring chamber (33) is ascertained and the density is calculated therefrom.

3. A method according to claim 1 **characterised in that** in step b) the chamber (41; 46; 33) is filled to a predetermined amount.

4. A method according to claim 3 **characterised in that** at least a part of the useful material flow is continuously fed to the measuring chamber (33) and a flow which is conveyed out of the measuring chamber is regulated to keep the filling of the measuring chamber (33) at the predetermined amount.

5. A method according to one of the preceding claims **characterised in that** the harvesting machine is a combine harvester (1) and the measuring chamber (33) is the grain tank of the combine harvester (1).

6. A method according to claim 3 **characterised in that** the predetermined amount is complete filling of the measuring chamber (41; 46) and useful material which is fed beyond the complete filling thereof to the measuring chamber (41; 46) is discharged through an overflow.

7. A method according to claim 6 **characterised in that** useful material continuously flows out of the measuring chamber (41; 46), wherein the supplied useful material flow is greater than the discharge flow.

8. A method according to one of the preceding claims **characterised in that** optimisation includes altering (57; 74) at least one operating parameter of the separating stage (6-12) in a direction leading to an increase in the density of the separated useful material flow.

9. A method according to claim 8 **characterised in that** the change (57) in the operating parameter is effected only when the density obtained in step f) is below a reference density by more than a predetermined amount.

10. A method according to one of the preceding claims **characterised in that** optimisation includes altering (63) at least one operating parameter of the separating stage (6-12) in a direction leading to a reduction in a residual proportion of useful material in the residual material flow.

11. A method according to claim 10 **characterised in that** the change (63) in the operating parameter is effected only when the density obtained in step f) differs from the reference density by less than a predetermined amount.

12. A method according to one of claims 8 to 11 **characterised in that** a direction in the change in the operating parameter, which leads to an increase in the density of the useful material flow or a reduction in the residual proportion, is experimentally ascertained (59, 60; 65, 66).

13. A method according to one of claims 8 to 12 **characterised in that** if the change in a first selected parameter of the separating stage does not lead to an expected increase in the density of the useful material flow or a reduction in the residual proportion, a second parameter is selected (56) and changed (57).

14. A method according to one of the preceding claims **characterised in that** the steps c) to g) are iterated.

15. A method according to claim 14 **characterised in that** the reference density used in g) of a given iteration is derived (77) from a density measured in step c) of a preceding iteration.

16. A method according to claim 15 and claim 9 or claim 11 **characterised in that** the predetermined amount is proportion to the change in the parameter.

17. A method according to claim 9 or claim 11 **characterised in that** the reference density used in steps c) to g) is previously measured (52) at a predetermined precise adjustment.

18. A method according to one of the preceding claims **characterised in that** initially adjusted (53, 71) values of operating parameters are predetermined in dependence on the kind of crop to be harvested.

19. A self-propelled harvesting machine having a separating stage (6-12) for separating a crop material flow into a useful material flow and a residual material flow, a measuring chamber (41; 46; 33) for catching at least a part of the useful material flow, a sensor (42) for detecting the mass of the useful material in the measuring chamber (41; 46; 33) and a control device (29) for the separating stage (6-12) for ascertaining the density of the useful material contained in the measuring chamber and optimising operating parameters of the separating stage on the basis of the ascertained density, in accordance with a method according to one of the preceding claims.

## Revendications

1. Procédé pour l'exploitation d'une moissonneuse automotrice (1) comprenant les étapes consistant à :
a) séparer en continu un courant de produit de récolte en un courant de matière utile et en un courant de matière résiduelle dans un étage de séparation (6-12) de la machine (1) en réglant l'étage de séparation (6-12) pour obtenir un courant de matière utile de pureté élevée ;
b) récupérer au moins une partie du courant de matière utile à partir de l'étage de séparation (6-12) dans une chambre de mesure (41 ; 46 ; 33) ;
c) peser la matière utile contenue dans la chambre de mesure (41 ; 46 ; 33) et déterminer la densité, à partir de la masse mesurée, comme valeur de référence (D_{réf}) ;
d) séparer en continu un courant de produit de récolte en un courant de matière utile et en un courant de matière résiduelle dans un étage de séparation (6-12) de la machine (1) après avoir modifié le réglage de l'étage de séparation (6-12) ;
e) récupérer au moins une partie du courant de matière utile à partir de l'étage de séparation (6-12) dans une chambre de mesure (41 ; 46 ; 33) ;
f) peser la matière utile contenue dans la chambre de mesure (41 ; 46 ; 33) et déterminer la densité (D_{act}) à partir de la masse mesurée ;
g) optimiser (51-56 ; 71-79) les paramètres d'exploitation de l'étage de séparation (6-12) à l'aide d'une comparaison entre la valeur de référence (D_{réf}) de la densité et la densité déterminée (D_{act}).

2. Procédé selon la revendication 1, **caractérisé en ce qu'**on mesure le niveau de remplissage de la matière utile dans la chambre de mesure (33) et on calcule la densité à partir de ladite mesure.

3. Procédé selon la revendication 1, **caractérisé en ce que**, à l'étape b), la chambre (41 ; 46 ; 33) est remplie jusqu'à une valeur prédéfinie.

4. Procédé selon la revendication 3, **caractérisé en ce qu'**on achemine en continu à la chambre de mesure (33) au moins une partie du courant de matière utile et on règle un courant éjecté de la chambre de mesure pour maintenir le remplissage de la chambre de mesure (33) à la valeur prédéfinie.

5. Procédé selon l'une quelconque des revendications précédentes, **caractérisé en ce que** la moissonneuse est une moissonneuse-batteuse (1) et la chambre de mesure (33) représente la trémie à grains de la moissonneuse-batteuse (1).

6. Procédé selon la revendication 3, **caractérisé en ce que** la valeur prédéfinie représente le remplissage complet de la chambre de mesure (41 ; 46) et **en ce que** la matière utile éjectée de la chambre de mesure (41 ; 46) au-delà du remplissage complet est évacuée via un trop-plein.

7. Procédé selon la revendication 6, **caractérisé en ce que** la matière utile se déverse en continu hors de la chambre de mesure (41 ; 46), le courant de matière utile acheminé étant plus fort que le courant qui se déverse.

8. Procédé selon l'une quelconque des revendications précédentes, **caractérisé en ce que** l'optimisation comprend la modification (57 ; 74) d'au moins un paramètre d'exploitation de l'étage de séparation (6-12) dans une direction qui va dans le sens d'une augmentation de la densité de la matière utile séparée.

9. Procédé selon la revendication 8, **caractérisé en ce que** la modification (57) du paramètre d'exploitation n'est mise en oeuvre que lorsque la densité que l'on obtient à l'étape f) se situe en dessous d'une densité de référence, à concurrence de plus d'une valeur prédéfinie.

10. Procédé selon l'une quelconque des revendications précédentes, **caractérisé en ce que** l'optimisation comprend la modification (63) d'au moins un paramètre d'exploitation de l'étage de séparation (6-12) dans une direction qui va dans le sens d'une réduction d'une fraction résiduelle de matière utile dans le courant de matière résiduelle.

11. Procédé selon la revendication 10, **caractérisé en ce que** la modification (63) du paramètre d'exploitation n'est mise en oeuvre que lorsque la densité que l'on obtient à l'étape f) s'écarte de la densité de référence, à concurrence d'une valeur inférieure à une valeur prédéfinie.

12. Procédé selon l'une quelconque des revendications 8 à 11, **caractérisé en ce qu'**on détermine par expérimentation (59, 60 ; 65, 66) une direction de la modification du paramètre d'exploitation qui donne lieu à une augmentation de la densité du courant de matière utile ou à une réduction de la fraction résiduelle.

13. Procédé selon l'une quelconque des revendications 8 à 12, **caractérisé en ce que**, lorsque la modification d'un premier paramètre sélectionné de l'étage de séparation ne donne pas lieu à une augmentation escomptée de la densité du courant de matière utile ou à une réduction escomptée de la fraction résiduelle, on sélectionne (56) un deuxième paramètre et on le modifie (57).

14. Procédé selon l'une quelconque des revendications précédentes, **caractérisé en ce qu'**on répète les étapes c) à g).

15. Procédé selon la revendication 14, **caractérisé en ce qu'**on dérive (77) la densité de référence utilisée à l'étape g) d'une itération donnée, d'une densité mesurée à l'étape c) d'une itération précédente.

16. Procédé selon la revendication 15 et selon la revendication 9 ou 11, **caractérisé en ce que** la valeur prédéfinie est proportionnelle à la modification du paramètre.

17. Procédé selon la revendication 9 ou 11,
**caractérisé en ce que** la densité de référence utilisée dans les étapes c) à g) est mesurée (52) au préalable lors d'un réglage précis prédéfini.

18. Procédé selon l'une quelconque des revendications précédentes, **caractérisé en ce que** des valeurs initialement réglées (53, 71) de paramètres d'exploitation sont prédéfinies en fonction du type de fruit à récolter.

19. Moissonneuse automotrice comprenant un étage de séparation (6-12) pour la séparation d'un courant de produit de récolte en un courant de matière utile et en un courant de matière résiduelle, une chambre de mesure (41 ; 46 ; 33) pour la récupération d'au moins une partie du courant de matière utile, un capteur (42) pour enregistrer la masse de la matière utile dans la chambre de mesure (41 ; 46 ; 33) et un dispositif de commande (29) pour l'étage de séparation (6-12) afin de déterminer la densité de la matière utile contenue dans la chambre de mesure et d'optimiser les paramètres d'exploitation de l'étage de séparation à l'aide de la densité déterminée, conformément à un procédé selon l'une quelconque des revendications précédentes.
